# FASCICULE DE BREVET EUROPEEN

(11) **EP 3 054 760 B1**
(45) Date de publication et mention de la délivrance du brevet: **09.08.2017**
(21) Numéro de dépôt: 14790226.6
(22) Date de dépôt: 07.10.2014
(51) Int. Cl.: A01D 78/10

(54) **MACHINE DE FENAISON PRESENTANT UNE ADAPTATION AU SOL AMELIOREE**
HEUERNTEMASCHINE MIT VERBESSERTER BODENANPASSUNG
HAYMAKING MACHINE WITH AN IMPROVED GROUND SURFACE FOLLOWING

(30) Priorité: 08.10.2013 FR 1359744
(43) Date de publication de la demande: 17.08.2016
(73) Titulaire: Kuhn S.A., 67700 Saverne (FR)
(72) Inventeur: MATHIS, Mathieu, 67700 Monswiller (FR); HIGEL, Eric, 67310 Hohengoeft (FR); QUIRIN, Michel, 67310 Allenwiller (FR)
(74) Mandataire: Esch, Esther Evelyne
(86) Numéro de dépôt international: PCT/FR2014/052537
(87) Numéro de publication internationale: WO 2015/052427

(56) Documents cités:
- FR-A1- 2 890 526
- FR-A5- 2 080 428
- NL-C2- 1 035 029

## Description

La présente invention se rapporte à une machine de fenaison, notamment une faneuse, comportant un bâti portant plusieurs rotors de fanage qui peuvent être entraînés en rotation autour d'axes de rotation sensiblement verticaux ou inclinés vers une direction d'avancement et portant des roulettes pouvant prendre appui sur le sol dans une position de travail de la machine, lesquels rotors de fanage possédant des fourches dirigées vers le sol et dont des pointes de fourches se situent à une certaine hauteur par rapport au sol dans la position de travail, le bâti comportant, d'une part, une partie avant conçue pour être accrochée à un tracteur et munie d'un moyen d'appui au sol pouvant tourner par rapport à la partie avant autour d'un axe transversal, lequel moyen d'appui au sol étant situé, dans la position de travail, en avant des rotors de fanage, et d'autre part, une partie arrière portant les rotors de fanage, laquelle partie arrière est articulée sur la partie avant au moyen d'un dispositif d'articulation s'étendant, dans la position de travail et suivant la direction d'avancement, entre les roulettes et le moyen d'appui, et comportant, d'une part, au moins un orifice allongé de l'une des parties avant et arrière dans lequel est guidé au moins un barreau transversal à la direction d'avancement et solidaire de l'autre des parties avant et arrière, et d'autre part, un organe de réglage articulé sur la partie avant et sur la partie arrière et décalé en hauteur par rapport audit au moins un barreau.

Une machine de ce type est connue du document FR 2 890 526 A1. Sur cette machine, le moyen d'appui au sol est constitué par des roues au moyen desquelles un timon de la partie avant repose sur le sol. Ces roues sont montées sur un axe transversal autour duquel elles peuvent tourner. L'orifice allongé est une fente verticale de la partie avant, dans laquelle peut se déplacer le barreau porté par la partie arrière. L'organe de réglage s'étend au-dessus de l'orifice allongé et présente une orientation rapprochée de l'horizontale. Cet agencement du dispositif d'articulation permet à la partie arrière portant les rotors de fanage, de se déplacer en hauteur par rapport à la partie avant, de sorte que lesdits rotors de fanage peuvent s'adapter aux dénivellations du sol indépendamment de la partie avant. Ce déplacement de la partie arrière par rapport à la partie avant est essentiellement parallèle à une longueur de la fente, ou encore, essentiellement perpendiculaire à une longueur du timon. Ainsi, pendant le travail, la partie arrière conserve une orientation sensiblement constante par rapport à la partie avant, à savoir, l'inclinaison par rapport à la verticale des axes de rotation des rotors de fanage demeure sensiblement constante. Lorsque l'ensemble tracteur - machine évolue sur un terrain irrégulier, les mouvements verticaux du tracteur sont transmis à la machine et se traduisent par des oscillations de la partie avant autour de l'axe transversal des roues. Par suite, la partie arrière se déplace par rapport à la partie avant. Alors, la hauteur par rapport au sol des pointes des fourches disposées en avant des roulettes portant les rotors de fanage, varie dans d'importantes proportions, ce qui se traduit par une mauvaise qualité de râtelage desdites fourches. Par exemple, un basculement de la partie avant, vers l'arrière autour de l'axe transversal des roues, induit un déplacement du barreau vers le haut de l'orifice allongé, et par conséquent un relèvement desdites pointes de fourches par rapport au sol, d'où des végétaux non râtelés qui subsistent au sol. Dans le cas inverse, lesdites pointes de fourches grattent le sol et souillent les végétaux déplacés avec de la terre.

La présente invention a pour but de proposer une machine de fenaison qui ne présente pas les inconvénients précités. A cet effet, une importante caractéristique de l'invention consiste en ce que l'orifice allongé présente, en projection sur un plan vertical et parallèle à la direction d'avancement, un angle d'inclinaison par rapport à la verticale dont la valeur est telle que dans la position de travail de la machine, la hauteur des pointes des fourches disposées en avant des roulettes, par rapport au sol, demeure sensiblement constante, indépendamment d'une position pivotée de la partie avant par rapport au moyen d'appui, autour de l'axe transversal.

L'inclinaison de l'orifice allongé par rapport à la verticale entraîne que, lorsque la partie arrière se déplace par rapport à la partie avant, le barreau se déplace, par rapport à la partie avant, non seulement en hauteur, mais également longitudinalement. Le déplacement de la partie arrière par rapport à la partie avant comporte alors, outre une composante de translation verticale, également une composante de rotation dans le plan vertical et parallèle à la direction d'avancement. Cette composante de rotation apporte une correction à la hauteur des fourches par rapport au sol lorsque ces dernières se déplacent avec la partie arrière, de sorte que la hauteur des pointes des fourches disposées en avant des roulettes demeure sensiblement constante par rapport au sol. Ainsi, lorsque la partie avant pivote autour de l'axe transversal du moyen d'appui, par suite de l'évolution de la machine sur un terrain irrégulier, la hauteur par rapport au sol desdites pointes de fourches, demeure sensiblement constante. La machine selon l'invention présente ainsi une qualité de travail améliorée sur les terrains irréguliers.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue de dessus d'un exemple de réalisation d'une machine selon l'invention, en position de travail ;
- la figure 2 représente une vue de dessus de l'exemple de réalisation, en position de transport ;
- la figure 3 représente une vue de côté d'une première variante de réalisation de l'exemple de réalisation des figures 1 et 2, en position de travail, attelée à un tracteur ;
- la figure 4 représente une vue de côté d'une deuxième variante de réalisation de l'exemple de réalisation des figures 1 et 2, en position de travail, attelée à un tracteur ;
- la figure 5 représente une vue en perspective de l'exemple de réalisation, en position de travail ;
- la figure 6 représente une vue de côté de l'exemple variante de réalisation, dans différentes situations de travail.

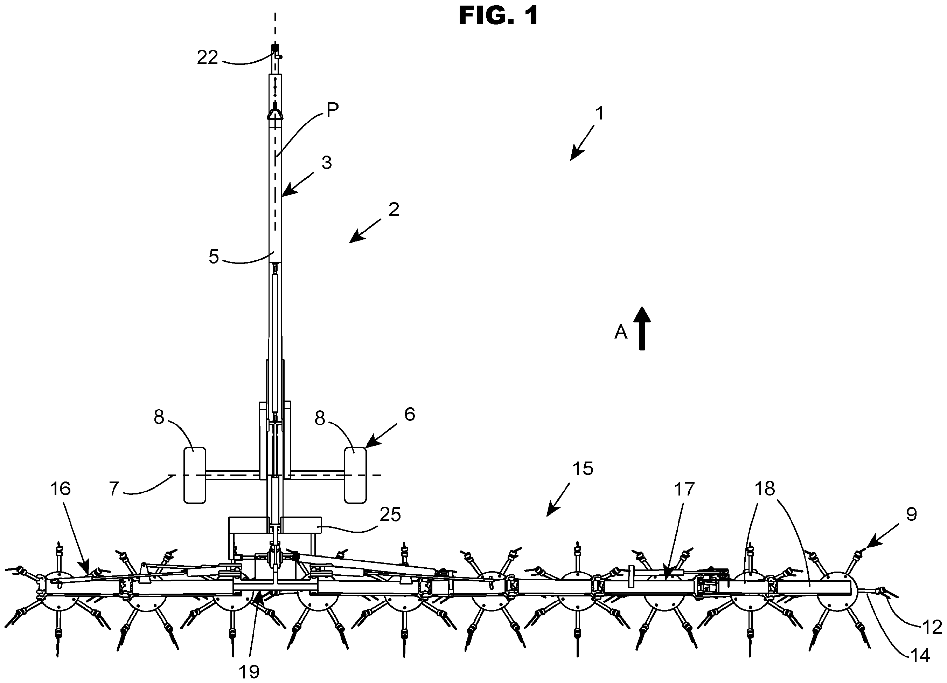

Telle qu'elle est représentée sur les figures 1, 2 et 3, la machine (1) selon l'invention est une machine de fenaison du type faneuse de fourrage. Cette machine (1) comporte un bâti (2). Le bâti (2) comporte une partie avant (3). Celle-ci est conçue pour être accrochée à un tracteur (4) permettant de déplacer la machine (1) dans une direction d'avancement (A). Dans la suite de la description, les notions « avant », « arrière », « gauche » et « droite » sont définies par rapport à la direction d'avancement (A), tandis que les notions « haut » et « bas » se rapportent au sol. La partie avant (3) comporte notamment un timon (5) dont une longueur est sensiblement parallèle à la direction d'avancement (A). La partie avant (3) est également munie d'un moyen d'appui (6) au sol pouvant tourner par rapport à la partie avant (3) autour d'un axe transversal (7). Selon l'exemple de réalisation des figures, le moyen d'appui (6) au sol comporte au moins une roue (8) pouvant tourner autour dudit axe transversal (7). Le moyen d'appui (6) au sol comporte, par exemple, un train de roues (8) montées sur la partie avant (3) autour de l'axe transversal (7) autour duquel elles peuvent tourner.

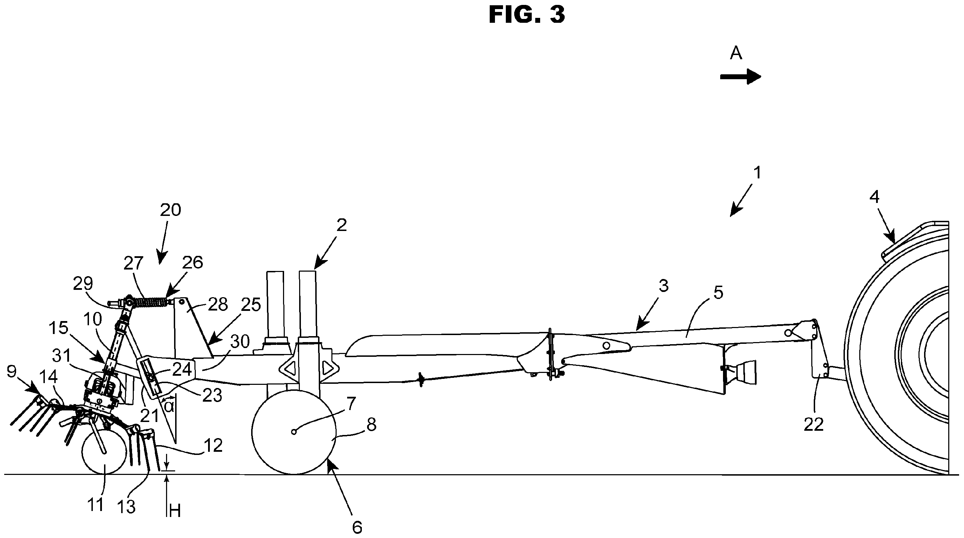

Le bâti (2) porte plusieurs rotors de fanage (9) qui peuvent être entraînés en rotation autour d'axes de rotation (10) sensiblement verticaux ou inclinés vers la direction d'avancement (A) et portant des roulettes (11) pouvant prendre appui sur le sol dans une position de travail de la machine (1) illustrée à la figure 3. Les rotors de fanage (9) possèdent des fourches (12) dirigées vers le sol et dont les pointes (13) de fourches (12) se situent à une certaine hauteur (H) par rapport au sol dans la position de travail. Chaque rotor de fanage (9) comporte un moyeu monté rotatif sur un axe de rotation (10) respectif relié au bâti (2). La partie supérieure de chaque axe de rotation (10) porte le rotor de fanage (9) correspondant, tandis que sa partie inférieure porte une roulette (11) qui prend appui sur le sol dans la position de travail de la machine (1). Chaque moyeu est muni de bras (14) qui s'étendent en forme de rayons. Ces bras (14) sont disposés à des distances sensiblement régulières les uns des autres. Chaque bras (14) porte à son extrémité éloignée du moyeu correspondant une fourche (12) respective. Dans la position de travail de la figure 3, le moyen d'appui (6) au sol est situé en avant des rotors de fanage (9).

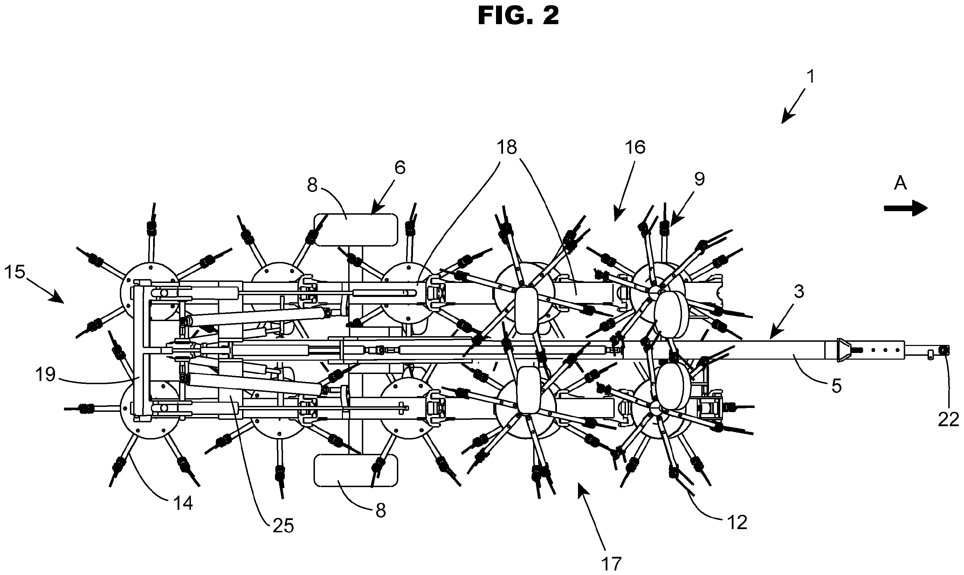

Le bâti (2) comporte par ailleurs une partie arrière (15) portant les rotors de fanage (9). Les axes de rotation (10) sont portés par cette partie arrière (15). La partie arrière (15) comporte deux portions latérales (16, 17) portant des rotors de fanage (9). Chaque portion latérale (16, 17) comporte plusieurs sections latérales (18) qui sont articulées les unes aux autres autours d'axes orientés, dans la position de travail, sensiblement dans la direction d'avancement (A). Chaque section latérale (18) porte au moins un rotor de fanage (9). Pendant le travail, les rotors de fanage (9) sont mis en rotation via un moyen moteur comportant, par exemple, un arbre de transmission principal conçu pour être relié à une prise de force du tracteur (4), ainsi que des arbres de transmissions intermédiaires sensiblement parallèles aux sections latérales (18) à l'intérieur desquelles ils sont par exemple logés. La partie arrière (15) comporte une portion centrale (19) à laquelle les portions latérales (16, 17) sont reliées. Une portion latérale (16) se situe sur le côté gauche de la portion centrale (19) et l'autre (17) sur le côté droit de la portion centrale (19). Dans la position de travail, les portions latérales (16, 17) s'étendent transversalement, notamment perpendiculairement à la direction d'avancement (A). Les portions latérales (16, 17) sont articulées à la portion centrale (19) de manière à pouvoir être repliées vers l'avant. Ainsi, dans une position de transport de la machine (1), illustrée à la figure 2, les portions latérales (16, 17) s'étendent le long de la partie avant (3) du bâti (2). Selon l'exemple de réalisation représenté sur cette figure, les portions latérales (16, 17) s'étendent de part et d'autre du timon (5) que comporte la partie avant (3).

La portion centrale (19) dont se compose la partie arrière (15) est articulée sur la partie avant (3) au moyen d'un dispositif d'articulation (20). Ainsi qu'il ressort notamment de la figure 3, dans la position de travail, le dispositif d'articulation (20) s'étend, suivant la direction d'avancement (A), entre les roulettes (11) et le moyen d'appui (6). Le dispositif d'articulation (20) s'étend sensiblement entre le moyen d'appui (6) et l'extrémité arrière (21) de la partie avant (3) opposée à l'extrémité avant (22) conçue pour être accrochée au tracteur (4). De plus, dans la position de travail, le dispositif d'articulation (20) s'étend au-dessus des rotors de fanage (9), notamment au-dessus des fourches (12) situées en avant des roulettes (11) et/ou au-dessus des roulettes (11) elles-mêmes. Le dispositif d'articulation (20) comporte au moins un orifice allongé (23). Cet orifice allongé (23) est situé sur l'une des parties avant et arrière (3 et 15). Le dispositif d'articulation (20) comporte également au moins un barreau (24) sensiblement horizontal solidaire de l'autre des parties avant et arrière (3 et 15). Dans la position de travail de la machine (1), ce barreau (24) est transversal à la direction d'avancement (A). Il est guidé dans l'orifice allongé (23) de sorte que le barreau (24) puisse se déplacer dans l'orifice allongé (23) suivant une longueur de celui-ci. Selon l'exemple de réalisation des figures, le barreau (24) est un axe. De plus, le barreau (24) est orienté perpendiculairement à la direction d'avancement (A), au moins dans la position de travail de la machine (1). Dans cet exemple de réalisation, l'orifice allongé (23) peut être situé sur la partie avant (3). La partie avant (3) comporte un support (25) lié au timon (5), lequel support (25) délimite l'arrière de la partie avant (3). L'orifice allongé (23) est pratiqué dans le support (25), sensiblement au niveau de l'extrémité arrière (21) de la partie avant (3). Avec l'orifice allongé (23) situé sur la partie avant (3), le barreau (24) est porté par la portion centrale (19) de la partie arrière (15). L'orifice allongé (23) se présente sous la forme d'une fente rectiligne ou curviligne. Le dispositif d'articulation (20) comporte également un organe de réglage (26) articulé sur la partie avant (3) et sur la partie arrière (15). L'organe de réglage (26) est décalé en hauteur par rapport au barreau (24). Selon l'exemple de réalisation des figures, l'organe de réglage (26) est articulé sur la portion centrale (19) de la partie arrière (15). Il est constitué par une bielle (27) articulée directement sur la partie avant (3) et directement sur la portion centrale (19) de la partie arrière (15).

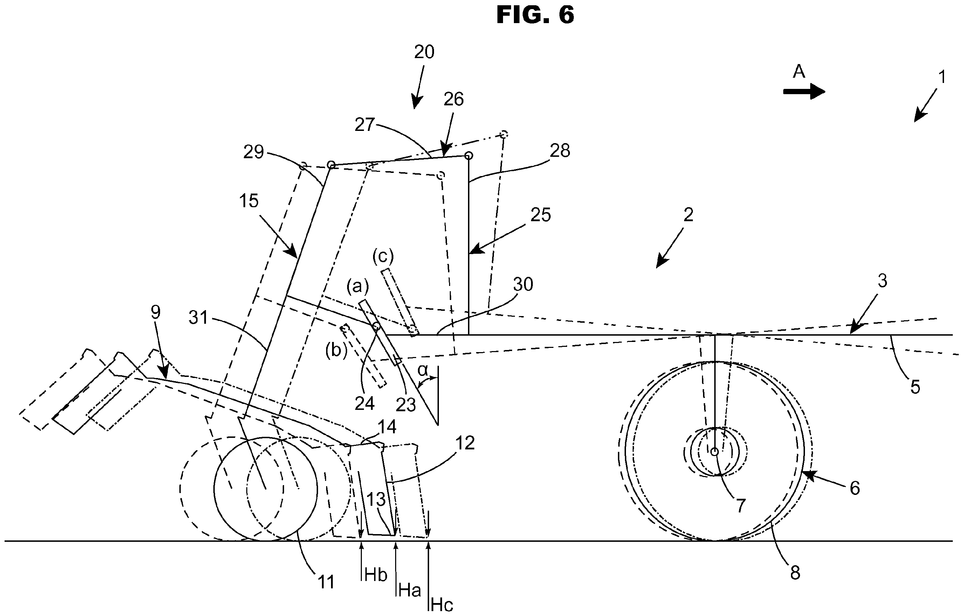

L'invention est notamment caractérisée par le fait que l'orifice allongé (23) présente, en projection sur un plan (P) vertical et parallèle à la direction d'avancement (A), un angle d'inclinaison (α) par rapport à la verticale. Le plan (P) est par exemple un plan vertical médian du timon (5) de la partie avant (3). Du fait de l'angle d'inclinaison (α) par rapport à la verticale, l'orifice allongé (23) s'étend verticalement et horizontalement. La valeur de l'angle d'inclinaison (α) est telle que, dans la position de travail de la machine (1), la hauteur (H) des pointes (13) des fourches (12) disposées en avant des roulettes (11), par rapport au sol, demeure sensiblement constante indépendamment d'une position pivotée de la partie avant (3) par rapport au moyen d'appui (6), autour de l'axe transversal (7) de liaison du moyen d'appui (6) à la partie avant (3). Dans le cas d'un orifice allongé (23) de forme curviligne, l'inclinaison est mesurée entre la verticale et une ligne droite moyenne dudit orifice allongé (23). Le déplacement de la partie arrière (15) par rapport à la partie avant (3) associe, à une composante de translation verticale, une composante de rotation supplémentaire de la partie arrière (15) dans le plan (P) qui apporte une correction à la hauteur (H) des pointes (13) des fourches (12) par rapport au sol, lorsque ces fourches (12) se déplacent avec la partie arrière (15). Ainsi, la hauteur (H) des pointes (13) des fourches (12) disposées en avant des roulettes (11) demeure sensiblement constante par rapport au sol, indépendamment de la position pivotée de la partie avant (3) par rapport au moyen d'appui (6), autour de l'axe transversal (7). Cet effet apparaît nettement à l'examen de la figure 6 qui représente schématiquement une partie de la machine (1) en vue de côté. Sur cette figure est représentée, en traits ininterrompus, une position initiale repérée par la lettre (a), dans laquelle le timon (5) de la partie avant (3) est parallèle au sol. La hauteur correspondante des pointes (13) des fourches (12) par rapport au sol est indiquée par le repère (Ha). En traits interrompus est représentée une deuxième position désignée par la lettre (b), dans laquelle la partie avant (3) est pivotée vers l'arrière de sorte que le support (25) soit rapproché du sol. Dans cette position (b), la hauteur des pointes (13) des fourches (12) est repérée (Hb). Enfin, la figure 6 illustre une troisième position (c) dans laquelle la partie avant (3) est pivotée vers l'avant de sorte que le support (25) soit éloigné du sol. Dans cette position (c), la hauteur des pointes (13) des fourches (12) est repérée (Hc). Il ressort distinctement d'un examen comparatif des trois positions (a), (b) et (c), ainsi que des hauteurs (Ha), (Hb) et (Hc) correspondantes, que la hauteur (H) des pointes (13) des fourches (12) est sensiblement constante par rapport au sol. Dans les faits, un déplacement de la partie arrière (15) par rapport au sol, dû à un déplacement des parties avant et arrière (3 et 15) entre elles, est une combinaison, d'une part, d'une première composante de déplacement de la partie arrière (15) autour de ses roulettes (11), liée à un déplacement de l'organe de réglage (26) par rapport au sol, et d'autre part, d'une deuxième composante de déplacement de la partie arrière (15) autour de ses roulettes (11), liée à un déplacement du barreau (24) au sein de l'orifice allongé (23). La deuxième composante de déplacement tend à annuler la première composante de déplacement, de sorte que les pointes (13) des fourches (12) situées à l'avant des roulettes (11) conservent une hauteur (H) sensiblement constante par rapport au sol.

L'invention prévoit notamment que l'angle d'inclinaison (α) soit compris entre 5° et 40°. Une valeur optimale de l'angle d'inclinaison (α), illustrée par l'exemple de réalisation des figures, se situe entre 15° et 30°.

Selon une première variante de réalisation, l'organe de réglage (26) s'étend au-dessus du barreau (24) et de l'orifice allongé (23). En sus, l'orifice allongé (23) présente une inclinaison vers l'arrière compte-tenu de la direction d'avancement (A), en suivant une direction du sol vers le haut. Dans cette première variante de réalisation, le barreau (24) est porté par une partie inférieure de la partie arrière (15) ou bien par une partie inférieure du support (25) présent à l'arrière de la partie avant (3). L'organe de réglage (26) est articulé sur des parties supérieures (28, 29) respectives du support (25) et de la partie arrière (15). Selon la réalisation de la figure 3, l'orifice allongé (23) se situe dans la partie inférieure (30) du support (25) tandis que le barreau (24) est porté par la partie inférieure (31) de la partie arrière (15). Lorsque la partie avant (3) bascule vers l'arrière autour de l'axe transversal (7), de sorte que le support (25) se rapproche du sol, l'organe de réglage (26) est déplacé vers l'arrière et fait pivoter la partie arrière (15) vers l'arrière autour de ses roulettes (11). Ce premier mouvement tend, à lui seul, à éloigner du sol les pointes (13) des fourches (12) situées en avant des roulettes (11). Cependant, dans le même temps, le barreau (24) se déplace d'une position intermédiaire au sein de l'orifice allongé (23), vers le haut de ce dernier, ce qui a pour effet de déplacer le barreau (24) vers l'arrière par rapport à la partie avant (3). Ce deuxième mouvement tend, de son côté, à rapprocher du sol les pointes (13) des fourches (12) situées en avant des roulettes (11). La simultanéité des premier et deuxième mouvements a pour effet que la hauteur (H) desdites pointes (13) de fourches (12) par rapport au sol ne varie quasiment pas. A l'inverse, lorsque la partie avant (3) bascule vers l'avant autour de l'axe transversal (7), de sorte que le support (25) s'éloigne du sol, l'organe de réglage (26) est déplacé vers l'avant et fait pivoter la partie arrière (15) vers l'avant autour de ses roulettes (11). Ce premier mouvement tend, à lui seul, à rapprocher du sol les pointes (13) des fourches (12) situées en avant des roulettes (11). Cependant, dans le même temps, le barreau (24) se déplace d'une position intermédiaire au sein de l'orifice allongé (23), vers le bas de ce dernier, ce qui a pour effet de déplacer le barreau (24) vers l'avant par rapport à la partie avant (3). Ce deuxième mouvement tend, de son côté, à éloigner du sol les pointes (13) des fourches (12) situées en avant des roulettes (11). La simultanéité des premier et deuxième mouvements a pour effet que la hauteur (H) desdites pointes (13) de fourches (12) par rapport au sol ne varie quasiment pas.

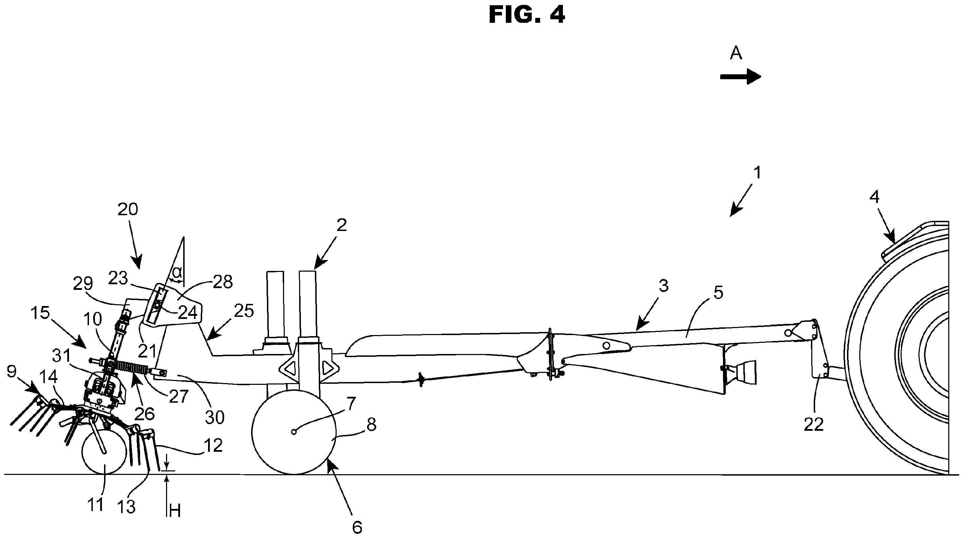

Selon une deuxième variante de réalisation, l'organe de réglage (26) s'étend au-dessous du barreau (24) et de l'orifice allongé (23). En sus, l'orifice allongé (23) présente une inclinaison vers l'avant compte-tenu de la direction d'avancement (A), en suivant une direction du sol vers le haut. Dans cette deuxième variante de réalisation, le barreau (24) est porté par la partie supérieure de la partie arrière (15) ou bien par la partie supérieure du support (25) présent à l'arrière de la partie avant (3). L'organe de réglage (26) est articulé sur les parties inférieures (30, 31) respectives du support (25) et de la partie arrière (15). Selon la réalisation de la figure 4, l'orifice allongé (23) se situe dans la partie supérieure (28) du support (25) tandis que le barreau (24) est porté par la partie supérieure (29) de la partie arrière (15). Lorsque la partie avant (3) bascule vers l'arrière autour de l'axe transversal (7), de sorte que le support (25) se rapproche du sol, l'organe de réglage (26) est déplacé vers l'arrière et fait pivoter la partie arrière (15) vers l'arrière autour de ses roulettes (11). Ce premier mouvement tend, à lui seul, à éloigner du sol les pointes (13) des fourches (12) situées en avant des roulettes (11). Cependant, dans le même temps, le barreau (24) se déplace d'une position intermédiaire au sein de l'orifice allongé (23), vers le haut de ce dernier, ce qui a pour effet de déplacer le barreau (24) vers l'avant par rapport à la partie avant (3). Ce deuxième mouvement tend, de son côté, à rapprocher du sol les pointes (13) des fourches (12) situées en avant des roulettes (11). La simultanéité des premier et deuxième mouvements a pour effet que la hauteur (H) desdites pointes (13) de fourches (12) par rapport au sol ne varie quasiment pas. A l'inverse, lorsque la partie avant (3) bascule vers l'avant autour de l'axe transversal (7), de sorte que le support (25) s'éloigne du sol, l'organe de réglage (26) est déplacé vers l'avant et fait pivoter la partie arrière (15) vers l'avant autour de ses roulettes (11). Ce premier mouvement tend, à lui seul, à rapprocher du sol les pointes (13) des fourches (12) situées en avant des roulettes (11). Cependant, dans le même temps, le barreau (24) se déplace d'une position intermédiaire au sein de l'orifice allongé (23), vers le bas de ce dernier, ce qui a pour effet de déplacer le barreau (24) vers l'arrière par rapport à la partie avant (3). Ce deuxième mouvement tend, de son côté, à éloigner du sol les pointes (13) des fourches (12) situées en avant des roulettes (11). La simultanéité des premier et deuxième mouvements a pour effet que la hauteur (H) desdites pointes (13) de fourches (12) par rapport au sol ne varie quasiment pas.

Selon une caractéristique avantageuse de l'invention, l'organe de réglage (26) comporte une bielle (27) articulée sur la partie avant (3) et sur la partie arrière (15). Selon l'exemple de réalisation des figures, l'organe de réglage (26) est constitué par cette bielle (27). Cette dernière est articulée directement sur la partie avant (3). La bielle (27) est de plus articulée directement sur la partie arrière (15). La bielle (27) peut être de longueur fixe. Elle peut aussi être de longueur variable. Une bielle (27) de longueur variable, notamment une bielle (27) réglable en longueur, permet d'ajuster l'inclinaison vers l'avant des axes de rotation (10), lorsque la machine (1) est en position de travail. Ceci permet d'ajuster la hauteur (H) nominale des pointes (13) des fourches (12) situées à l'avant des roulettes (11), cette hauteur (H) nominale correspondant au timon (5) sensiblement parallèle au sol. Cette hauteur (H) nominale correspond à la hauteur (Ha) de la figure 6. Une bielle (27) de longueur variable est, par exemple, un vérin.

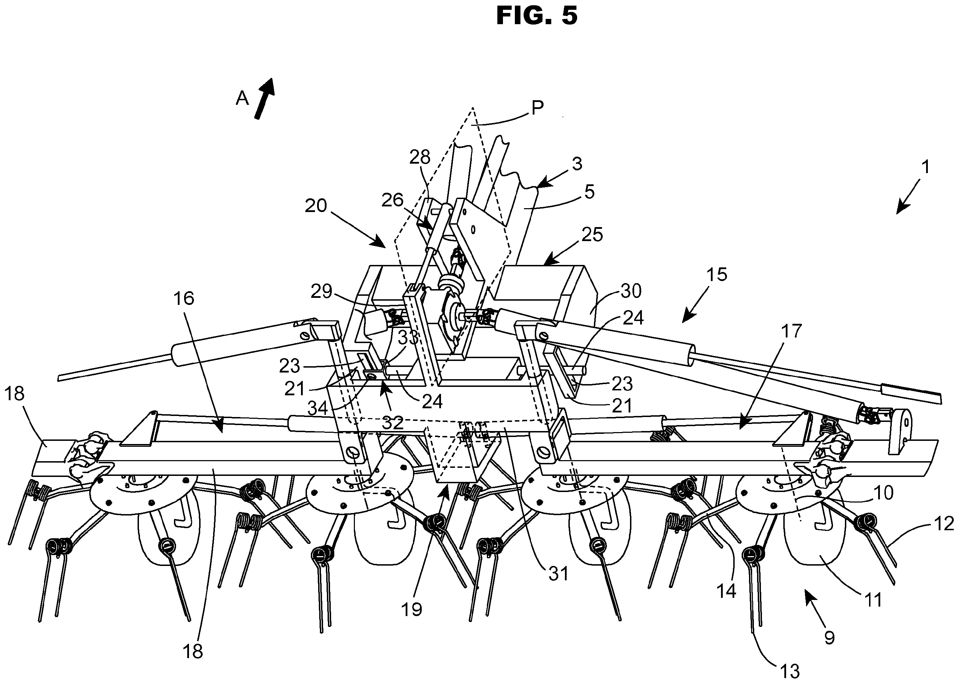

Selon une caractéristique avantageuse de l'invention, visible sur la figure 5, le dispositif d'articulation (20) comporte deux orifices allongés (23). Ils sont espacés l'un de l'autre transversalement. Chaque orifice allongé (23) est porté par l'une des parties avant et arrière (3 et 15). Chaque orifice allongé (23) guide un barreau (24) respectif sensiblement horizontal, transversal à la direction d'avancement (A) et solidaire de l'autre des parties avant et arrière (3 et 15). Selon cet agencement, chaque barreau (24) peut se translater au sein de l'orifice allongé (23) correspondant, indépendamment de l'autre barreau (24), notamment indépendamment d'une translation de cet autre barreau (24) au sein de l'autre orifice allongé (23) correspondant. Selon cet agencement, le dispositif d'articulation (20) comportant l'organe de réglage (26) et les deux barreaux (24), permet, pendant le travail de la machine (1), de contrôler tous les mouvements de la partie arrière (15) par rapport à la partie avant (3) dans les directions verticale et longitudinale. Il peut en sus être prévu qu'un barreau (24) soit associé à un moyen (32) permettant de limiter un déplacement transversal de la partie arrière (15) par rapport à la partie avant (3). Selon l'exemple de réalisation illustré par la figure 5, un tel moyen (32) comporte une chape (33) avec un axe (34) dirigé dans la direction d'avancement (A). Le barreau (24) est guidé dans l'orifice allongé (23) correspondant à travers cette chape (33). Cette chape (33) et son axe (34) limitent les déplacements de la partie arrière (15), latéralement vers le côté droit et vers le côté gauche, par rapport à la partie avant (3). L'autre barreau (24) pourrait également être équipé d'une telle chape (33). Selon l'exemple de réalisation illustré par la figure 5, les barreaux (24) sont dirigés vers les côtés. L'organe de réglage (26) s'étend sensiblement dans un plan vertical médian de la partie avant (3), orienté suivant la direction d'avancement (A). Chaque barreau (24), et chaque orifice allongé (23) correspondant, s'étendent sur la gauche, respectivement sur la droite, de ce plan médian. Chaque orifice allongé (23) est situé sur un côté latéral respectif du support (25) porté par la partie avant (3). Chaque barreau (24) est porté par la portion centrale (19) de la partie arrière (15).

Dans cet agencement avec deux barreaux (24) et deux orifices allongés (23), les deux barreaux (24) sont de préférence alignés. De plus, les orifices allongés (23) dans lesquels ils sont guidés présentent, en projection sur le plan (P), des angles d'inclinaison (α) respectifs identiques par rapport à la verticale. Cette caractéristique permet une adaptation en hauteur identique pour les rotors de fanage (9) placés sur la gauche de la portion centrale (19) et ceux placés sur la droite de cette portion centrale (19).

Bien entendu, l'invention n'est pas limitée à l'exemple de réalisation décrit et représenté sur les figures annexées. Des modifications restent possibles dans la limite définie par les revendications.

## Revendications

1. Machine de fenaison, notamment une faneuse, comportant un bâti (2) portant plusieurs rotors de fanage (9) qui peuvent être entraînés en rotation autour d'axes de rotation (10) sensiblement verticaux ou inclinés vers une direction d'avancement (A) et portant des roulettes (11) pouvant prendre appui sur le sol dans une position de travail de la machine (1), lesquels rotors de fanage (9) possédant des fourches (12) dirigées vers le sol et dont des pointes (13) de fourches (12) se situent à une certaine hauteur (H) par rapport au sol dans la position de travail, le bâti (2) comportant, d'une part, une partie avant (3) conçue pour être accrochée à un tracteur (4) et munie d'un moyen d'appui (6) au sol pouvant tourner par rapport à la partie avant (3) autour d'un axe transversal (7), lequel moyen d'appui (6) au sol étant situé, dans la position de travail, en avant des rotors de fanage (9), et d'autre part, une partie arrière (15) portant les rotors de fanage (9), laquelle partie arrière (15) est articulée sur la partie avant (3) au moyen d'un dispositif d'articulation (20) s'étendant, dans la position de travail et suivant la direction d'avancement (A), entre les roulettes (11) et le moyen d'appui (6), et comportant, d'une part, au moins un orifice allongé (23) de l'une des parties avant et arrière (3 et 15) dans lequel est guidé au moins un barreau (24) transversal à la direction d'avancement (A) et solidaire de l'autre des parties avant et arrière (3 et 15), et d'autre part, un organe de réglage (26) articulé sur la partie avant (3) et sur la partie arrière (15) et décalé en hauteur par rapport audit au moins un barreau (24), ***caractérisée en ce que*** l'orifice allongé (23) présente, en projection sur un plan (P) vertical et parallèle à la direction d'avancement (A), un angle d'inclinaison (α) par rapport à la verticale dont la valeur est telle que dans la position de travail de la machine (1), la hauteur (H) des pointes (13) des fourches (12) disposées en avant des roulettes (11), par rapport au sol, demeure sensiblement constante, indépendamment d'une position pivotée de la partie avant (3) par rapport au moyen d'appui (6), autour de l'axe transversal (7).

2. Machine selon la revendication 1, ***caractérisée en ce que*** l'angle d'inclinaison (α) est compris entre 5° et 40°.

3. Machine selon la revendication 1, ***caractérisée en ce que*** l'angle d'inclinaison (α) est compris entre 15° et 30°.

4. Machine selon l'une quelconque des revendications 1 à 3, ***caractérisée en ce que*** l'organe de réglage (26) s'étend au-dessus du barreau (24) et de l'orifice allongé (23), et que l'orifice allongé (23) présente une inclinaison vers l'arrière compte-tenu de la direction d'avancement (A), en suivant une direction du sol vers le haut.

5. Machine selon l'une quelconque des revendications 1 à 3, ***caractérisée en ce que*** l'organe de réglage (26) s'étend au-dessous du barreau (24) et de l'orifice allongé (23), et que l'orifice allongé (23) présente une inclinaison vers l'avant compte-tenu de la direction d'avancement (A), en suivant une direction du sol vers le haut.

6. Machine selon l'une quelconque des revendications 1 à 5, ***caractérisée en ce que*** l'organe de réglage (26) comporte une bielle (27) articulée sur la partie avant (3) et sur la partie arrière (15).

7. Machine selon l'une quelconque des revendications 1 à 6, ***caractérisée en ce que*** le dispositif d'articulation (20) comporte deux orifices allongés (23) espacés l'un de l'autre transversalement, que chaque orifice allongé (23) est porté par l'une des parties avant et arrière (3 et 15) et qu'il guide un barreau (24) respectif sensiblement horizontal, transversal à la direction d'avancement (A) et solidaire de l'autre des parties avant et arrière (3 et 15).

8. Machine selon la revendication 7, ***caractérisée en ce que*** les deux barreaux (24) sont alignés et sont guidés dans les orifices allongés (23) présentant, en projection sur le plan (P), des angles d'inclinaison (α) respectifs identiques par rapport à la verticale.

9. Machine selon l'une quelconque des revendications 1 à 8, ***caractérisée en ce que*** la partie arrière (15) du bâti (2) comporte deux portions latérales (16, 17) portant des rotors de fanage (9), et une portion centrale (19) à laquelle les portions latérales (16, 17) sont articulées de manière à pouvoir être repliées vers l'avant pour, au transport, s'étendre le long de la partie avant (3) du bâti (2).

## Patentansprüche

1. Heuwerbungsmaschine, insbesondere ein Heuwender, mit einem Gestell (2), das mehrere Heuwerbungsrotoren (9) trägt, die in Drehung angetrieben werden können um im Wesentlichen vertikale oder in eine Vorschubrichtung (A) geneigte Drehachsen (10) und die Rollen (11) tragen, die in einer Arbeitsstellung der Maschine (1) sich auf dem Boden abstützen können, wobei die Heuwerbungsrotoren (9) zum Boden gerichtete Gabeln (12) aufweisen, von denen sich die Spitzen (13) der Gabeln (12) in der Arbeitsstellung in einer gewissen Höhe (H) in Bezug auf den Boden befinden, wobei das Gestell (2) einerseits einen Vorderteil (3) umfasst, der ausgelegt ist, um an einen Traktor (4) gekuppelt zu werden, und der mit einem Bodenabstützungsmittel (6) ausgestattet ist, das sich in Bezug auf den Vorderteil (3) um eine Querachse (7) drehen kann, wobei sich das Bodenabstützungsmittel (6) in Arbeitsstellung vor den Heuwerbungsrotoren (9) befindet, und andererseits einen Hinterteil (15), der die Heuwerbungsrotoren (9) trägt, wobei der Hinterteil (15) am Vorderteil (3) mittels einer Anlenkungsvorrichtung (20) angelenkt ist, die sich in Arbeitsstellung und gemäß der Vorschubrichtung (A) zwischen den Rollen (11) und dem Abstützungsmittel (6) erstreckt, und die einerseits mindestens ein Längsloch (23) von einem aus Vorder- und Hinterteil (3 und 15) umfasst, in dem mindestens ein zur Vorschubrichtung (A) quer verlaufender Stab (24) geführt wird, der mit dem anderen aus Vorder- und Hinterteil (3 und 15) fest verbunden ist, und andererseits ein Einstellelement (26), das am Vorderteil (3) und am Hinterteil (15) angelenkt ist und in Bezug auf den mindestens einen Stab (24) höhenversetzt ist, ***dadurch gekennzeichnet*, dass** das Längsloch (23), in Projektion auf eine vertikale und zur Vorschubrichtung (A) parallele Ebene (P), einen Neigungswinkel (α) in Bezug auf die Vertikale aufweist, dessen Wert so ist, dass in Arbeitsstellung der Maschine (1) die Höhe (H) der Spitzen (13) der Gabeln (12), die vor den Rollen (11) angeordnet sind, in Bezug auf den Boden im Wesentlichen konstant bleibt, unabhängig von einer um die Querachse (7) geschwenkten Stellung des Vorderteils (3) in Bezug auf das Abstützungsmittel (6).

2. Maschine nach Anspruch 1, ***dadurch gekennzeichnet*, dass** der Neigungswinkel (α) zwischen 5° und 40° beträgt.

3. Maschine nach Anspruch 1, ***dadurch gekennzeichnet*, dass** der Neigungswinkel (α) zwischen 15° und 30° beträgt.

4. Maschine nach irgendeinem der Ansprüche 1 bis 3, ***dadurch gekennzeichnet*, dass** sich das Einstellelement (26) über dem Stab (24) und dem Längsloch (23) erstreckt und dass das Längsloch (23) eine Rückwärtsneigung unter Berücksichtigung der Vorschubrichtung (A) gemäß einer Richtung vom Boden aufwärts aufweist.

5. Maschine nach irgendeinem der Ansprüche 1 bis 3, ***dadurch gekennzeichnet*, dass** sich das Einstellelement (26) unter dem Stab (24) und dem Längsloch (23) erstreckt und dass das Längsloch (23) eine Vorwärtsneigung unter Berücksichtigung der Vorschubrichtung (A) gemäß einer Richtung vom Boden aufwärts aufweist.

6. Maschine nach irgendeinem der Ansprüche 1 bis 5, ***dadurch gekennzeichnet*, dass** das Einstellelement (26) ein Zwischenglied (27) umfasst, das am Vorderteil (3) und am Hinterteil (15) angelenkt ist.

7. Maschine nach irgendeinem der Ansprüche 1 bis 6, ***dadurch gekennzeichnet*, dass** die Anlenkungsvorrichtung (20) zwei Längslöcher (23) umfasst, die quer verlaufend voneinander beabstandet sind, dass jedes Längsloch (23) von einem aus Vorder- und Hinterteil (3 und 15) getragen wird, und dass es einen jeweiligen im Wesentlichen horizontalen Stab (24) führt, der quer zur Vorschubrichtung (A) verlauft und mit dem anderen aus Vorder- und Hinterteil (3 und 15) fest verbunden ist.

8. Maschine nach Anspruch 7, ***dadurch gekennzeichnet*, dass** die zwei Stäbe (24) fluchtend ausgerichtet sind und in den Längslöchern (23) geführt werden, die in Projektion auf die Ebene (P) jeweilige Neigungswinkel (α) aufweisen, die in Bezug auf die Vertikale identisch sind.

9. Maschine nach irgendeinem der Ansprüche 1 bis 8, ***dadurch gekennzeichnet,* dass** der Hinterteil (15) des Gestells (2) zwei seitliche Bestandteile (16, 17) umfasst, die Heuwerbungsrotoren (9) tragen, und einen mittleren Bestandteil (19), an dem die seitlichen Bestandteile (16, 17) so angelenkt sind, dass sie nach vorne geklappt werden können, um sich beim Transport entlang des Vorderteils (3) des Gestells (2) zu erstrecken.

## Claims

1. Haymaking machine, in particular a tedder, including a frame (2) carrying several haying rotors (9) that can be driven in rotation around rotation axes (10) that are substantially vertical or tilted in a direction of advance (A) and carrying rollers (11) that can rest on the ground when the machine (1) is in a work position, the said haying rotors (9) having forks (12) pointing to the ground whose fork (12) points (13) are located at a certain height (H) from the ground in the work position, the frame (2) including, on the one hand, a front part (3) designed to be hitched to a tractor (4) and equipped with a ground support means (6) that can turn relative to the front part (3) around a transverse axis (7), the said ground support means (6) being located, in the work position, in front of the haying rotors (9) and, on the other hand, a rear part (15) carrying the haying rotors (9), the said rear part (15) being articulated to the front part (3) by means of an articulation device (20) extending, in the work position and according to the direction of advance (A), between the rollers (11) and the support means (6) and including, on the one hand, at least one oblong hole (23) on one of the front and rear parts (3 and 15) into which is guided at least one bar (24) transverse to the direction of advance (A) and rigidly fastened to the other of the front and rear parts (3 and 15) and, on the other hand, an adjustment element (26) articulated to the front part (3) and to the rear part (15) and height-offset relative to the said at least one bar (24), ***characterised in* that** the oblong hole (23) has, projecting on a vertical plane (P) parallel to the direction of advance (A), a tilt angle (α) relative to the vertical whose value is such that when the machine (1) is in the work position, the height (H) of the points (13) of the forks (12) positioned in front of the rollers (11), relative to the ground, remains substantially constant, irrespective of a swivelled position of the front part (3) relative to the support means (6), around the transverse axis (7).

2. Machine according to claim 1, ***characterised in* that** the tilt angle (α) is between 5° and 40°.

3. Machine according to claim 1, ***characterised in* that** the tilt angle (α) is between 15° and 30°.

4. Machine according to any one of the claims 1 to 3, ***characterised in* that** the adjustment element (26) extends above the barrel (24) and the oblong hole (23), and that the oblong hole (23) is tilted backwards taking account of the direction of advance (A), following an upward direction from the ground.

5. Machine according to any one of the claims 1 to 3, ***characterised in* that** the adjustment element (26) extends below the bar (24) and the oblong hole (23), and that the oblong hole (23) is tilted forwards taking account of the direction of advance (A), following an upward direction from the ground.

6. Machine according to any one of the claims 1 to 5, ***characterised in* that** the adjustment element (26) includes a connecting rod (27) articulated to the front part (3) and to the rear part (15).

7. Machine according to any one of the claims 1 to 6, ***characterised in* that** the articulation device (20) includes two oblong holes (23) transversely spaced from each other, that each oblong hole (23) is carried by one of the front and rear parts (3 and 15) and that it guides a respective substantially horizontal bar (24), transverse to the direction of advance (A) and rigidly fastened to the other of the front and rear parts (3 and 15).

8. Machine according to claim 7, ***characterised in* that** the two bars (24) are aligned and are guided in the oblong holes (23) having, projecting on the plane (P), identical respective tilt angles (α) relative to the vertical.

9. Machine according to any one of the claims 1 to 8, ***characterised in* that** the rear part (15) of the frame (2) includes two side portions (16, 17) carrying haying rotors (9), and a central portion (19) to which the side portions (16, 17) are articulated so that they can be folded forwards to extend, during transport, along the length of the front part (3) of the frame (2).
